# EUROPÄISCHE PATENTANMELDUNG

(11) **EP 3 257 608 A2**
(43) Veröffentlichungstag der Anmeldung: **20.12.2017**
(21) Anmeldenummer: 17170751.6
(22) Anmeldetag: 12.05.2017
(51) Int. Cl.: B22F 3/105, G01N 21/00, G01N 23/00

(54) **3D-DRUCKVERFAHREN UND 3D-DRUCKVORRICHTUNG**

(30) Priorität: 14.06.2016 DE 102016210542
(71) Anmelder: Testia GmbH, 28199 Bremen (DE)
(72) Erfinder: SPECKMANN, Holger, 28790 Schwanewede (DE); KIEFEL, Denis, 81549 München (DE)
(74) Vertreter: Isarpatent

(57) **Zusammenfassung**

Ein 3D-Druckverfahren zur additiven Fertigung von Bauteilen (1) umfasst Zuführen eines Modelliermaterials (2) an eine 3D-Druckvorrichtung (100), Bestimmen von Qualitätsmerkmalen des Modelliermaterials (2) mit einer Überwachungseinrichtung (5), Analysieren einer Produktqualität des Modelliermaterials (2) mit einer Analyseeinrichtung (13) auf Basis der bestimmten Qualitätsmerkmale, schichtweises Ablegen und Verflüssigen des Modelliermaterials (2), und schichtweises Aushärten (M5) des verflüssigten Modelliermaterials (2).

## Beschreibung

Die vorliegende Erfindung betrifft ein 3D-Druckverfahren zur additiven Fertigung von Bauteilen und eine 3D-Druckvorrichtung. Insbesondere befasst sich die vorliegende Erfindung mit der Qualitätsüberwachung von zugeführtem Material während der additiven Fertigung von Bauteilen.

Bei generativen bzw. additiven Fertigungsverfahren, auch allgemein als "3D-Druckverfahren" bezeichnet, werden ausgehend von einem digitalisierten geometrischen Modell eines Objekts ein oder mehrere Ausgangsmaterialien sequentiell in Lagen übereinandergeschichtet und ausgehärtet. So wird beispielsweise beim Selektiven Laserschmelzen (SLM) ein Bauteil schichtweise aus einem Modelliermaterial, beispielsweise ein Kunststoff oder ein Metall, aufgebaut, indem das Modelliermaterial in Pulverform auf eine Unterlage aufgebracht wird und gezielt durch lokale Laserbestrahlung verflüssigt wird, wodurch sich nach Abkühlung ein festes, zusammenhängendes Bauteil ergibt. 3D-Drucken bietet außergewöhnliche Designfreiheit und erlaubt es unter anderem Objekte mit überschaubaren Aufwand herzustellen, welche mit herkömmlichen Methoden nicht oder nur unter erheblichem Aufwand herstellbar wären. Aus diesem Grund sind 3D-Druckverfahren derzeit weit verbreitet im Industriedesign, in der Automobilindustrie, der Luft- und Raumfahrtindustrie oder generell in der industriellen Produktentwicklung, in der eine ressourceneffiziente Prozesskette zur bedarfsgerechten Klein- und Großserienfertigung individualisierter Bauteile eingesetzt wird.

Pulverrückstände zuvor verwendeter Pulvermaterialien, andere Fremdkörper und Kontaminationen des Modelliermaterials können die Qualität von additiv gefertigten Bauteilen beeinflussen. Grundsätzlich ist es somit in 3D-Druckverfahren erforderlich, das zugeführte Modelliermaterial einer Qualitätskontrolle zu unterziehen bzw. anderweitig sicherzustellen, dass das Modelliermaterial nicht mit Fremdmaterial oder anderen Kontaminationen verunreinigt ist. Beispielsweise kann die chemische Zusammensetzung eines pulverförmigen Modelliermaterials auf Basis einer repräsentativen Stichprobe in einem labortechnischen Umfeld analysiert werden, bevor die Gesamtheit des Materials für die Befüllung einer 3D-Druckvorrichtung verwendet wird, siehe beispielsweise die Druckschrift J. A. Slotwinski et al., "Characterization of Metal Powders Used for Additive Manufacturing", Journal of Research of the National Institute of Standards and Technology, Volume 119, 2014. Entspricht diese Stichprobe den Anforderungen, so kann das gesamte Modelliermaterial für den Druck freigegeben werden. Sollte jedoch der nicht untersuchte Anteil des Modelliermaterials dennoch Fehler oder Verunreinigungen aufweisen, so wird dies üblicherweise erst nach dem Drucken in der Nachkontrolle des gefertigten Bauteils bemerkt. Dies kann die additive Fertigung von Bauteilen sehr zeit- und kostenintensiv machen, da fehlerhafte Bauteile als Ausschuss aussortiert werden müssen.

Vor diesem Hintergrund liegt der vorliegenden Erfindung die Aufgabe zugrunde, einfache Lösungen zu finden, um die geforderte Qualität des zugeführten Materials während der additiven Fertigung sicherzustellen.

Erfindungsgemäß wird diese Aufgabe gelöst durch ein 3D-Druckverfahren mit den Merkmalen des Patentanspruchs 1 und eine 3D-Druckvorrichtung mit den Merkmalen des Patentanspruchs 14.

Demgemäß ist ein 3D-Druckverfahren zur additiven Fertigung von Bauteilen vorgesehen. Das 3D-Druckverfahren umfasst Zuführen eines Modelliermaterials an eine 3D-Druckvorrichtung, Bestimmen von Qualitätsmerkmalen des Modelliermaterials mit einer Überwachungseinrichtung, Analysieren einer Produktqualität des Modelliermaterials mit einer Analyseeinrichtung auf Basis der bestimmten Qualitätsmerkmale, schichtweises Ablegen und Verflüssigen des Modelliermaterials, und schichtweises Aushärten des verflüssigten Modelliermaterials.

Ferner ist eine 3D-Druckvorrichtung zur additiven Fertigung von Bauteilen mit einem erfindungsgemäßen 3D-Druckverfahren vorgesehen. Die 3D-Druckvorrichtung umfasst eine Überwachungseinrichtung, welche dazu ausgebildet ist, die Qualitätsmerkmale des Modelliermaterials zu bestimmen, und eine Analyseeinrichtung, welche dazu ausgebildet ist, die Produktqualität des Modelliermaterials auf Basis der bestimmten Qualitätsmerkmale zu analysieren.

Die der vorliegenden Erfindung zugrunde liegende Idee besteht darin, die Qualität des innerhalb eines additiven Verfahrens zugeführten Materials "online" und in situ zu überwachen. Die Überwachungseinrichtung und/oder die Analyseeinrichtung können hierzu direkt in die 3D-Druckvorrichtung integriert bzw. an diese gekoppelt sein. Beispielsweise kann die Analyseeinrichtung einen Mikroprozessor oder dergleichen aufweisen, welcher auch komplexe multivariate statistische Analyseverfahren schnell und automatisiert durchführen kann. Beispielsweise kann die Analyseeinrichtung in eine zentrale Steuereinheit der 3D-Druckvorrichtung integriert sein. Das Material, beispielsweise ein Pulver, ein Granulat, oder ein festes oder flüssiges Medium, kann in der vorliegenden Erfindung während der Materialzufuhr an die 3D-Druckvorrichtung, d.h. prinzipiell auch zeitgleich zu dem eigentlichen Druckvorgang, auf Fremdpartikel, fehlerhaftes Pulver, Kontaminationen, usw., überprüft werden. Entsprechende Qualitätsmängel des Modelliermaterials können somit direkt in situ erkannt werden. Dies hat den erheblichen Vorteil, dass der aktuelle Druckvorgang gegebenenfalls angehalten, der Fehler behoben bzw. problematisches Material entfernt und/oder gereinigt und der Druckvorgang anschließend fortgesetzt werden kann. Aufgrund der vorliegenden Erfindung kann die Wahrscheinlichkeit des Auftretens von Fehlern gesenkt werden und letztendlich die Versagenswahrscheinlichkeit von Bauteilen vermindert werden. Schlussendlich werden somit die Kosten für beeinträchtigte oder unzureichende Qualität abgesenkt. Außerdem kann die Effizienz des gesamten Druckprozesses durch frühzeitige Erkennung von Fehlern oder Problemen in erheblichem Maße gesteigert werden.

3D-Druckverfahren sind insbesondere vorteilhaft, da sie die Herstellung von dreidimensionalen Komponenten in urformenden Verfahren ermöglichen, ohne spezielle, auf die äußere Form der Komponenten abgestimmte Fertigungswerkzeuge zu benötigen. Dadurch werden hocheffiziente, Material sparende und Zeit sparende Herstellungsprozesse für Bauteile und Komponenten ermöglicht. Besonders vorteilhaft sind derartige 3D-Druckverfahren für strukturelle Bauteile im Luft- und Raumfahrtbereich, da dort sehr viele verschiedene, auf spezielle Einsatzzwecke abgestimmte Bauteile eingesetzt werden, die in solchen 3D-Druckverfahren mit geringen Kosten, geringer Fertigungsvorlaufzeit und mit geringer Komplexität in den für die Herstellung benötigten Fertigungsanlagen herstellbar sind.

3D-Druckverfahren im Sinne der vorliegenden Anmeldung umfassen alle generativen bzw. additiven Fertigungsverfahren, bei welchen auf der Basis von geometrischen Modellen Objekte vordefinierter Form aus formlosen Materialien wie Flüssigkeiten und Pulvern oder formneutralen Halbzeugen wie etwa band- oder drahtförmigem Material mittels chemischer und/oder physikalischer Prozesse in einem speziellen generativen Fertigungssystem hergestellt werden. 3D-Druckverfahren im Sinne der vorliegenden Anmeldung verwenden dabei additive Prozesse, bei denen das Ausgangsmaterial schichtweise in vorgegebenen Formen sequentiell aufgebaut wird.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann das Bestimmen der Qualitätsmerkmale und das Analysieren der Produktqualität während dem Zuführen durchgeführt werden. Die Überwachung des Modelliermaterials kann auch zur generellen Untersuchung der Materialqualität verwendet werden, um z.B. eine zunehmende Degradation eins Pulvers über mehrere Druckzyklen hinweg zu überwachen. Es können somit auch Parameteroptimierungen der 3D-Druckvorrichtung und somit eine Optimierung der Druckqualität erzielt werden.

Gemäß einer Weiterbildung kann das Modelliermaterial kontinuierlich zugeführt werden.

Gemäß einer Weiterbildung können die Qualitätsmerkmale des Modelliermaterials lediglich für einen Anteil des zugführten Modelliermaterials stichprobenartig bestimmt werden. Beispielsweise kann je nach Volumen-/Massenstrom des Modelliermaterials das gesamte Material oder lediglich eine Anteil untersucht werden. Beispielsweise kann bei einer kontinuierlichen Materialzufuhr ein bestimmter Bruchteil eines Pulvers kontinuierlich abgezweigt werden und einer statistischen Auswertung unterzogen werden.

Gemäß einer Weiterbildung kann das schichtweise Ablegen und Verflüssigen gestoppt werden, wenn die analysierte Produktqualität vorgegebene Qualitätsbedingungen nicht erfüllt. Beispielsweise kann der Druckvorgang gestoppt werden, wenn bestimmte Fremdkörper in einem pulverförmigen Modelliermaterial aufgefunden werden oder wenn die Stärke der Verunreinigung des Pulvers eine bestimmte Kontaminationsschwelle überschreitet. Beispielsweise kann eine 3D-Druckvorrichtung in einem ersten Schritt pulverförmiges Titan verwenden. Sollte in einem zweiten Schritt vorgesehen sein, von Titan auf pulverförmiges Aluminium zu wechseln, so können ungewünschte Titanrückstände in der Pulverzuführung der 3D-Druckvorrichtung zurückbleiben, welche die gewünschten Eigenschaften der zu druckenden Aluminiumkomponenten herabsetzten können. Aufgrund der vorliegenden Erfindung ist es möglich, solche Verunreinigungen vor Ort festzustellen und gegebenenfalls zu beseitigen, bevor der Druckprozess fortgesetzt wird.

Gemäß einer Weiterbildung kann das Modelliermaterial gereinigt werden, wenn die analysierte Produktqualität vorgegebene Qualitätsbedingungen nicht erfüllt. Der Druckvorgang kann folglich nicht nur gestoppt werden, beispielsweise im Falle dass ein pulverförmiges Modelliermaterial mit Fremdkörpern verunreinigt ist, sondern die Fremdkörper und/oder andere Verunreinigungen können zudem automatisch entfernt werden. Allgemein kann das Modelliermaterial einer entsprechend notwendigen Aufbereitung bzw. Reinigung unterzogen werden, z.B. indem Feuchtigkeit entzogen wird oder dergleichen. Anschließend kann der Druckvorgang mit dem gereinigten Modelliermaterial fortgesetzt werden. Die Wirtschaftlichkeit der Erfindung wird in dieser Weiterbildung somit weiter erhöht.

Gemäß einer Weiterbildung kann das Bestimmen der Qualitätsmerkmale ein Verfahren aus der Gruppe von spektrometrischen Verfahren, gassensorischen Verfahren, optischen Verfahren und elektrischen Verfahren oder ähnlichen umfassen. Ein gassensorisches Verfahren kann beispielsweise auf Basis eines chemischen Sensors erfolgen, welcher eine Teil des Modelliermaterials in den gasförmigen Zustand, z.B. durch Wärmezufuhr, überführt, in welchem dieses quantitativ untersucht werden kann (eine so genannte elektronische Nase).

Das Verfahren kann aus der Gruppe von röntgenspektrometrischen Verfahren, elektronenspektrometrischen Verfahren und infrarotspektrometrischen Verfahren oder dergleichen ausgewählt sein. Mögliche elektronenspektrometrische Verfahren sind beispielsweise die Photoelektronenspektroskopie, die Auger-Elektronen-Spektroskopie, die Elektronenstrahlmikroanalyse oder die Elektronen-Energieverlustspektroskopie. Röntgenspektrometrische Verfahren umfassen die Röntgenabsorptionsspektroskopie, die Röntgenemissionsspektroskopie, die Photoelektronenspektroskopie, die Röntgenfluoreszenzanalyse, die energiedispersive Röntgenspektroskopie und beispielsweise die wellenlängendispersive Röntgenspektroskopie. Prinzipiell kann hierbei aber auch jedes dem Fachmann geläufige und für den vorliegenden Zweck geeignete Verfahren oder einen Kombination mehrerer solcher Verfahren zur Anwendung kommen.

Das Verfahren kann eine Wirbelstromprüfung umfassen. Die Wirbelstromprüfung (englisch: "Eddy Current Method") ist ein elektrisches Verfahren zur zerstörungsfreien Werkstoffprüfung, welche zur Kontrolle von elektrisch leitfähigen Werkstoffen eingesetzt werden kann, z.B. Metallpulvern. Hierbei können in dem Modelliermaterial mittels wechselnden Magnetfelder Wirbelströme induziert werden. Bei der Messung kann mittels eines Sensors die Wirbelstromdichte durch das von den Wirbelströmen erzeugte Magnetfeld detektiert werden. Hierbei macht man sich zunutze, dass Verunreinigungen in einem elektrisch leitfähigen Material eine andere elektrische Leitfähigkeit oder eine andere Permeabilität als das eigentliche Material aufweisen können.

Gemäß einer Weiterbildung kann das Modelliermaterial pulverförmig zugeführt werden.

Gemäß einer Weiterbildung kann das Modelliermaterial aus der Gruppe metallischer Materialien, metallischer Materialkombinationen und metallischer Legierungen ausgewählt sein.

Gemäß einer Weiterbildung kann das Modelliermaterial aus der Gruppe von Aluminium, Titan, Nickel oder einer Legierung davon ausgewählt sein.

Gemäß einer Weiterbildung können die Qualitätsmerkmale aus der Gruppe eines Reinheitsgrads, eines Feuchtigkeitsgrad, eines Kontaminationsgrads mit Fremdkörpern und eines Kontaminationsgrads mit Stoffen oder dergleichen ausgewählt sein. Andere in Frage kommende Qualitätsmerkmale umfassen beispielsweise die Größe bzw. Korngröße eines Pulvers bzw. dessen Größenverteilung oder Formverteilung. Ferner kommen als Qualitätsmerkmale die Porosität, die Dichte, thermische Eigenschaften, die Oberflächengröße und/oder die Oberflächenstrukturierung, und/oder die Mikrostrukturierung des Modelliermaterials oder dergleichen in Frage. Diese Qualitätsmerkmale können unterschiedliche Aspekte des Druckverfahrens beeinflussen. Beispielsweise wird das Verformungs- und Fließverhalten maßgeblich durch die geometrischen Eigenschaften des Modelliermaterials bestimmt, z.B. die Größe und Form der Pulverkörner, was wiederum Einfluss auf ein ausreichend gleichmäßiges Zuführen und Verteilen des Modelliermaterials beim Ablegen haben kann. Fremdkörper und Unreinheiten können die mechanische Integrität des gedruckten Bauteils beeinflussen, während die Porosität die Sinter- oder Schmelzeigenschaften und letztendlich die spätere Dichte des Bauteils bestimmen. Beispielsweise kann ein pulverförmiges Modelliermaterial mit Feuchtigkeit, Wasser, Ölen, Fetten, usw., durchsetzt sein. Geringe Spuren von diesen Verunreinigungen können je nach Anwendung jedoch unerheblich sein, so dass der Druckprozess erst ab dem Überschreiten des Kontaminationsgrads über eine vorgegebene Schwelle abgebrochen werden kann. Je nach Qualitätsmerkmal wird der Fachmann ein entsprechendes Verfahren zur Bestimmung auswählen. Auf Basis der bestimmten Qualitätsmerkmale lässt sich insbesondere die Gleichmäßigkeit von Material-Chargen (z.B. eines Pulvers) bestimmen und analysieren, so dass Abweichungen und Schwankungen zwischen den unterschiedlichen Chargen definiert und eingeschätzt werden können.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: schematische Ansicht einer 3D-Druckvorrichtung zur Durchführung eines 3D-Druckverfahrens gemäß einer Ausführungsform der Erfindung; und
- Fig. 2: ein schematisches Ablaufdiagramm des 3D-Druckverfahrens, welches von der 3D-Druckvorrichtung aus Fig. 1 durchgeführt wird.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

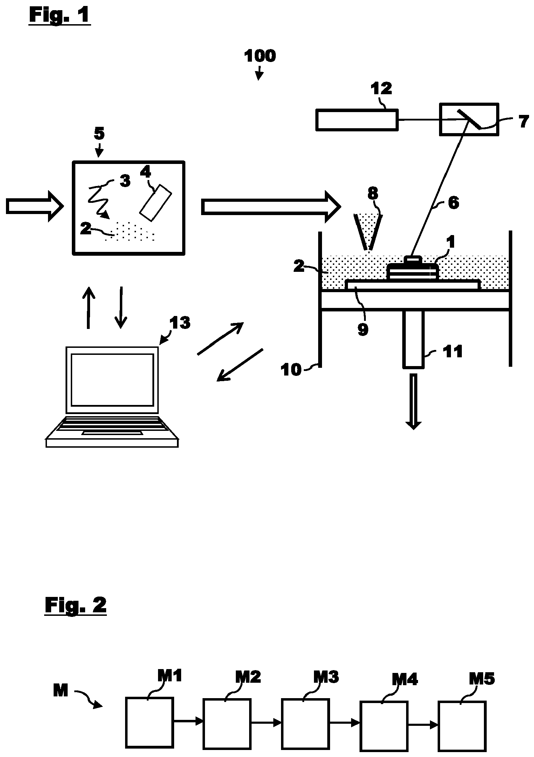

Figur 1 zeigt eine schematische Ansicht einer 3D-Druckvorrichtung 100 zur Durchführung eines 3D-Druckverfahrens M gemäß einer Ausführungsform der Erfindung. Ein schematisches Ablaufdiagramm eines solchen 3D-Druckverfahrens M wird in Fig. 2 dargestellt.

Das 3D-Druckverfahren M dient zur additiven Fertigung von Bauteilen 1. Hierzu umfasst das 3D-Druckverfahren M unter M1 Zuführen eines Modelliermaterials 2 an eine 3D-Druckvorrichtung 100. Ferner umfasst das 3D-Druckverfahren M unter M2 Bestimmen von Qualitätsmerkmalen des Modelliermaterials 2 mit einer Überwachungseinrichtung 5 und unter M3 Analysieren einer Produktqualität des Modelliermaterials 2 mit einer Analyseeinrichtung 13 auf Basis der bestimmten Qualitätsmerkmale. Daneben umfasst das 3D-Druckverfahren M unter M4 schichtweises Ablegen und Verflüssigen M4 des Modelliermaterials 2 und unter M5 schichtweises Aushärten M5 des verflüssigten Modelliermaterials 2.

Das Modelliermaterial 2 kann hierbei ein Kunststoff sein oder beispielsweise aus der Gruppe metallischer Materialien, metallischer Materialkombinationen und metallischer Legierungen ausgewählt sein. Insbesondere kann es sich bei dem Modelliermaterial 2 beispielsweise um Titan, Aluminium, Nickel, Stahl und/oder eine Legierung bzw. Materialkombination von diesen handeln. Zum Beispiel kann das Modelliermaterial 2 ein Aluminium-Silizium-Pulver sein, z.B. AlSi10Mg, oder ein fortgeschritteneres Material bzw. eine Materialmischung wie beispielsweise Scalmalloy® oder dergleichen. Ferner kann das Modelliermaterial 2 pulverförmig zugeführt und abgelegt werden.

Grundsätzlich sieht die vorliegende Erfindung vielfältige Möglichkeiten vor, das Modelliermaterial 2 zu verflüssigen, bei welchen Wärme gezielt lokal in abgelegtes Modelliermaterial 2 eingeleitet werden kann. Besonders die Verwendung von Lasern und/oder Teilchenstrahlen, z.B. Elektronenstrahlen, ist vorteilhaft, da hierbei Hitze sehr gezielt und kontrolliert erzeugbar ist. Das 3D-Druckverfahren M kann somit beispielsweise aus der Gruppe selektiven Lasersinterns, selektiven Laserschmelzens, selektiven Elektronenstrahlsinterns und selektiven Elektronenstrahlschmelzens oder dergleichen ausgewählt sein. Grundsätzlich kann jedoch ein beliebiges additives Verfahren zur Anwendung kommen. Im Folgenden wird das 3D-Druckverfahren M beispielhaft im Zusammenhang mit selektiven Laserschmelzen (SLM) erläutert werden, bei welchem das Modelliermaterial 2 in Pulverform auf eine Werkplattform 9 aufgebracht wird und gezielt durch lokale Laserbestrahlung mit einem Laserstrahl 6 verflüssigt wird, wodurch sich nach Abkühlung ein festes, zusammenhängendes Bauteil 1 ergibt.

Das 3D-Druckverfahren M wird mit der 3D-Druckvorrichtung 100 in Fig. 1 durchgeführt. Eine Energiequelle in Form eines Lasers 12, beispielsweise ein Nd:YAG-Laser, sendet einen Laserstrahl 6 ortsselektiv auf einen bestimmten Teil einer Pulveroberfläche des pulverförmigen Modelliermaterials 2, welches in einer Arbeitskammer 10 auf einer Werkplattform 9 aufliegt. Dazu kann eine optische Ablenkvorrichtung bzw. ein Scanner-Modul wie etwa ein beweglicher bzw. kippbarer Spiegel 7 vorgesehen sein, welcher den Laserstrahl 6 je nach seiner Kippstellung auf einen bestimmten Teil der Pulveroberfläche des Modelliermaterials 2 ablenkt. An der Auftreffstelle des Laserstrahls 6 wird das Modelliermaterial 2 erhitzt, so dass die Pulverpartikel lokal aufgeschmolzen werden und bei einem Abkühlen ein Agglomerat bilden. In Abhängigkeit von einem beispielsweise durch ein CAD-System ("computer-aided design") bereitgestellten und gegebenenfalls aufbereiteten digitalen Fertigungsmodell rastert der Laserstrahl 6 die Pulveroberfläche ab. Nach dem selektiven Schmelzen und lokalen Agglomerieren der Pulverpartikel in der Oberflächenschicht des Modelliermaterials 2 kann überschüssiges, nicht agglomeriertes Modelliermaterial 2 ausgesondert werden. Danach wird die Werkplattform 9 mittels eines Absenkkolbens 11 abgesenkt (siehe Pfeil in Fig. 1) und mit Hilfe einer Pulverzufuhr 8 oder einer anderen geeigneten Einrichtung neues Modelliermaterial 2 aus einem Reservoir in die Arbeitskammer 10 überführt. Das Modelliermaterial 2 kann zur Beschleunigung des Schmelzprozesses durch Infrarotlicht auf eine knapp unter der Schmelztemperatur des Modelliermaterial 2 liegende Arbeitstemperatur vorgewärmt werden. Auf diese Weise entsteht in einem iterativen generativen Aufbauprozess ein dreidimensionales gesintertes bzw. "gedrucktes" Bauteil 1 aus agglomeriertem Modelliermaterial 2. Das umliegende pulverförmige Modelliermaterial 2 kann dabei der Abstützung des bis dahin aufgebauten Teils des Metallbauteils 1 dienen. Durch die kontinuierliche Abwärtsbewegung der Werkplattform 9 entsteht das Bauteil 1 in schichtweiser Modellerzeugung.

Das 3D-Druckverfahren M zeichnet sich dadurch aus, dass Modelliermaterial 2 während der Zuführung in die Pulverzufuhr 8 vor dem Ablegen untersucht und analysiert wird. Hierbei wird das gesamte oder ein Anteil des Modelliermaterials 2 durch eine Überwachungseinrichtung 5 geleitet (siehe Pfeile in Fig. 1), in welcher bestimmte Qualitätsmerkmale des Modelliermaterials 2 bestimmt werden. Beispielsweise kann ein bestimmter Bruchteil des Modelliermaterials 2 kontinuierlich abgezweigt werden und auf seine Qualität hin ausgewertet werden. Ein solches Qualitätsmerkmal kann beispielsweise ein Reinheitsgrad, ein Feuchtigkeitsgrad, ein Kontaminationsgrad mit Fremdkörpern bzw. mit anderen Stoffen oder eine andere repräsentative und messbare Größe sein, welche Aufschluss über die Güte bzw. Qualität des Modelliermaterials 2 bietet. Andere in Frage kommende Qualitätsmerkmale umfassen beispielsweise die Korngröße des Pulvers. Beispielsweise kann ein pulverförmiges Modelliermaterial mit Feuchtigkeit, Wasser, Ölen, Fetten, usw., belastet sein, wobei die Stärke der Verunreinigung entsprechend quantitativ mit einem geeigneten Verfahren angegeben werden kann. Vorgesehene Verfahren umfassen spektrometrische Verfahren, gassensorische Verfahren, optische Verfahren, elektrische Verfahren und andere dem Fachmann geläufige Verfahren. Das Verfahren kann beispielsweise aus der Gruppe von röntgenspektrometrischen Verfahren, elektronenspektrometrischen Verfahren und infrarotspektrometrischen Verfahren oder dergleichen ausgewählt sein. Mögliche röntgenspektrometrische Verfahren sind insbesondere die Röntgenabsorptionsspektroskopie, die Röntgenemissionsspektroskopie, die Photoelektronenspektroskopie, die Röntgenfluoreszenzanalyse, die energiedispersive Röntgenspektroskopie und beispielsweise die wellenlängendispersive Röntgenspektroskopie. Fig. 1 zeigt hierfür stellvertretend eine Analysestrahlung 3, welche auf das Modelliermaterial 2 (in diesem Fall ein Pulver) gerichtet wird, wobei ein entsprechender Detektor 4 von dem bestrahlten Pulver ausgehende Strahlung nachweist. Aber auch optische Verfahren, elektrische Wirbelstromverfahren oder gassensorische Verfahren mit einem chemischen Sensor oder eine elektronischen Nase können zur Anwendung kommen. Besonders vorteilhaft können zerstörungsfreie Verfahren sein, bei welchen das gesamte Modelliermaterial 2 auch weiterhin für den sich anschließenden Druckprozess zur Verfügung steht.

Auf Basis der derart bestimmten Qualitätsmerkmale 3 wird die Produktqualität des Modelliermaterials 2 mit der Analyseeinrichtung 13 analysiert. Über eine Kommunikation zwischen der Überwachungseinrichtung 5 und der Analyseeinrichtung 13 (siehe Pfeile in Fig. 1) ist es möglich, die Bestandteile des zugeführten Modelliermaterials 2 - und falls vorhanden - nichterwünschte chemische Elemente zu analysieren sowie sonstige Fremdstoffe bzw. Fremdpartikel oder Materialüberreste nachzuweisen. Das Bilden eines Auswertungsergebnisses kann beispielsweise multivariate, d.h. mehrdimensionale, Analysemethoden umfassen, z.B. des gemessenen Strahlungsspektrums auf Basis eines chemometrischen Verfahrens. Es können somit bekannte mathematische bzw. statistische Werkzeuge aus dem Bereich der multivariaten Datenanalyse Verwendung finden, so dass auch geringe Verunreinigungen schnell nachweisbar gemacht werden können. Der Fachmann wird entsprechend zwischen verschiedenen Analysemethoden wählen können, um einen für die jeweilige Anwendung geeigneten Kompromiss zwischen Genauigkeit und Komplexität, d.h. letztendlich der Zeitdauer, der Analyse zu finden. In Weiterbildungen der 3D-Druckvorrichtung 100 können unterschiedliche Analysemethoden und unterschiedliche Bestimmungsverfahren implementiert sein, z.B. können diese in der Speichereinrichtung gespeichert sein, wobei der Nutzer unter verschiedenen Optionen auswählen kann. Die Analyseeinrichtung 13 kann nun voll- oder halbautomatisch oder durch manuelle Eingabe über eine Kommunikation den Druckprozess pausieren oder stoppen und dem Bediener eine Rückmeldung über die Produktqualität geben. Die 3D-Druckvorrichtung kann nach Auswertung des Analyseergebnisses von Verunreinigungen gereinigt werden. Alternativ oder zusätzlich kann der Anteil des Modelliermaterials 2 mit unzureichender Produktqualität gereinigt und/oder anderweitig aufbereitet werden. Im Anschluss ist es möglich, den Druck wieder fortzuführen. Insbesondere kann das derart gereinigte Modelliermaterial 2 weiter verwendet werden.

Die vorliegende Erfindung setzt demnach eine Onlinequalitätsüberwachung des zugeführten Modelliermaterials 2 um, die es erlaubt, das verwendete Modelliermaterial 2 auch noch während des eigentlichen Druckvorgangs zu untersuchen und aufbauend auf dem Ergebnis gegebenenfalls den Druck zu stoppen und einen Austausch und/oder eine Aufbereitung des Materials zu erwirken. Zusätzlich kann beispielsweise durch eine solche Online-Überprüfung die Gleichmäßigkeit von Material-Chargen bestimmt und analysiert werden, womit letztendlich das Problem unterschiedlicher Chargen besser definiert und eingeschätzt werden kann.

Die beschriebenen Verfahren können in allen Bereichen der Transportindustrie, beispielsweise für Straßenkraftfahrzeuge, für Schienenfahrzeuge oder für Wasserfahrzeuge, aber auch im Ingenieurs- und Maschinenbauwesen generell eingesetzt werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Bauteil
- 2: Modelliermaterial
- 3: Analysestrahlung
- 4: Detektor
- 5: Überwachungseinrichtung
- 6: Laserstrahl
- 7: Spiegel
- 8: Pulverzufuhr
- 9: Werkplattform
- 10: Arbeitskammer
- 11: Absenkkolben
- 12: Laser
- 13: Analyseeinrichtung
- 100: 3D-Druckvorrichtung
- M: 3D-Druckverfahren
- M1: Verfahrensschritt
- M2: Verfahrensschritt
- M3: Verfahrensschritt
- M4: Verfahrensschritt
- M5: Verfahrensschritt

## Patentansprüche

1. 3D-Druckverfahren (M) zur additiven Fertigung von Bauteilen (1), mit:
Zuführen (M1) eines Modelliermaterials (2) an eine 3D-Druckvorrichtung (100);
Bestimmen (M2) von Qualitätsmerkmalen des Modelliermaterials (2) mit einer Überwachungseinrichtung (5);
Analysieren (M3) einer Produktqualität des Modelliermaterials (2) mit einer Analyseeinrichtung (13) auf Basis der bestimmten Qualitätsmerkmale;
schichtweises Ablegen und Verflüssigen (M4) des Modelliermaterials (2); und
schichtweises Aushärten (M5) des verflüssigten Modelliermaterials (2).

2. 3D-Druckverfahren (M) nach Anspruch 1, wobei das Bestimmen (M2) der Qualitätsmerkmale und das Analysieren (M3) der Produktqualität während dem Zuführen (M1) durchgeführt wird.

3. 3D-Druckverfahren (M) nach einem der vorstehenden Ansprüche, wobei das Modelliermaterial (2) kontinuierlich zugeführt wird.

4. 3D-Druckverfahren (M) nach einem der vorstehenden Ansprüche, wobei die Qualitätsmerkmale des Modelliermaterials (2) lediglich für einen Anteil des zugführten Modelliermaterials (2) stichprobenartig bestimmt werden.

5. 3D-Druckverfahren (M) nach einem der vorstehenden Ansprüche, wobei das schichtweise Ablegen und Verflüssigen (M4) gestoppt wird, wenn die analysierte Produktqualität vorgegebene Qualitätsbedingungen nicht erfüllt.

6. 3D-Druckverfahren (M) nach einem der vorstehenden Ansprüche, wobei das Modelliermaterial (2) gereinigt wird, wenn die analysierte Produktqualität vorgegebene Qualitätsbedingungen nicht erfüllt.

7. 3D-Druckverfahren (M) nach einem der vorstehenden Ansprüche, wobei das Bestimmen (M2) der Qualitätsmerkmale ein Verfahren aus der Gruppe von spektrometrischen Verfahren, gassensorischen Verfahren, optischen Verfahren und elektrischen Verfahren umfasst.

8. 3D-Druckverfahren (M) nach Anspruch 7, wobei das Verfahren aus der Gruppe von röntgenspektrometrischen Verfahren, elektronenspektrometrischen Verfahren und infrarotspektrometrischen Verfahren ausgewählt ist.

9. 3D-Druckverfahren (M) nach Anspruch 7, wobei das Verfahren eine Wirbelstromprüfung umfasst.

10. 3D-Druckverfahren (M) nach einem der vorstehenden Ansprüche, wobei das Modelliermaterial (2) pulverförmig zugeführt wird.

11. 3D-Druckverfahren (M) nach einem der vorstehenden Ansprüche, wobei das Modelliermaterial (2) aus der Gruppe metallischer Materialien, metallischer Materialkombinationen und metallischer Legierungen ausgewählt ist.

12. 3D-Druckverfahren (M) nach Anspruch 11, wobei das Modelliermaterial (2) aus der Gruppe von Aluminium, Titan, Nickel oder einer Legierung davon ausgewählt ist.

13. 3D-Druckverfahren (M) nach einem der vorstehenden Ansprüche, wobei die Qualitätsmerkmale aus der Gruppe eines Reinheitsgrads, eines Feuchtigkeitsgrad, eines Kontaminationsgrads mit Fremdkörpern und eines Kontaminationsgrads mit Stoffen ausgewählt sind.

14. 3D-Druckvorrichtung (100) zur additiven Fertigung von Bauteilen (1) mit einem 3D-Druckverfahren nach einem der Ansprüche 1 bis 13, mit:
einer Überwachungseinrichtung (5), welche dazu ausgebildet ist, die Qualitätsmerkmale des Modelliermaterials (2) zu bestimmen; und
einer Analyseeinrichtung (13), welche dazu ausgebildet ist, die Produktqualität des Modelliermaterials (2) auf Basis der bestimmten Qualitätsmerkmale zu analysieren.
